# EUROPÄISCHE PATENTSCHRIFT

(11) **EP 1 648 949 B1**
(45) Veröffentlichungstag und Bekanntmachung des Hinweises auf die Patenterteilung: **13.03.2013**
(21) Anmeldenummer: 04763622.0
(22) Anmeldetag: 29.07.2004
(51) Int. Cl.: C08G 18/08, C08G 18/12, C08G 18/42, C08G 18/66, C09D 175/14

(54) **SELBSTVERNETZENDE HOCHMOLEKULARE POLYURETHAN-DISPERSION**
SELF-CROSSLINKING HIGH-MOLECULAR POLYURETHANE DISPERSION
DISPERSION E POLYURETHANE DE MASSE MOLECULAIRE ELEVEE, AUTORETICULANTE

(30) Priorität: 30.07.2003 DE 10334753
(43) Veröffentlichungstag der Anmeldung: 26.04.2006
(73) Patentinhaber: Construction Research & Technology GmbH, 83308 Trostberg (DE)
(72) Erfinder: MAIER, Alois, 84549 Engelsberg (DE); WOLFERTSTETTER, Franz, 83349 Palling (DE); WINKELMANN, Herbert, 84518 Garching (DE); WEICHMANN, Josef, 84568 Pleiskirchen (DE); KERN, Alfred, 84558 Kirchweidach (DE)
(74) Vertreter: Weiss, Wolfgang
(86) Internationale Anmeldenummer: PCT/EP2004/008528
(87) Internationale Veröffentlichungsnummer: WO 2005/010067

(56) Entgegenhaltungen:
- EP-A- 0 647 665
- EP-A- 0 729 991
- DE-A- 19 858 554
- PATENT ABSTRACTS OF JAPAN Bd. 1995, Nr. 09, 31. Oktober 1995 (1995-10-31) & JP 7 166130 A (DAINIPPON INK & CHEM INC), 27. Juni 1995 (1995-06-27)

## Beschreibung

Die vorliegende Erfindung betrifft eine selbstvernetzende Polyurethan-Dispersion auf Basis von oxidativ trocknenden Diolen und Triolen, Verfahren zu deren Herstellung und ihre Verwendung.

Für viele bauchemische Anwendungen sind Bindemittel von Interesse, bei denen eine Kombination aus physikalischer und chemischer Trocknung genutzt werden kann, wie beispielsweise Alkydharze.

Die Alkydharze bilden auf Grund ihrer Vielseitigkeit und universellen Anwendbarkeit die heute zweifelsfrei bedeutendste Gruppe synthetischer Lackbindemittel. Alkydharze stellen öl- bzw. fettsäuremodifizierte Polykondensate bzw. Polyester aus Polycarbonsäuren bzw. Polycarbonsäure-Anhydriden und Polyalkoholen dar. Die Variationsmöglichkeit von Alkydharzen hinsichtlich Aufbau und Zusammensetzung sind außerordentlich groß.

Als Rohstoffe können natürlich Triglyceride (Öle, Fette) oder definierte synthetische Fettsäuren eingesetzt werden. Das Eigenschafts-Profil der Alkydharze hängt von der Art und Menge der enthaltenen langkettigen Fettsäuren bzw. Öle ab. Je nach Grad der Ungesättigtheit unterscheidet man zwischen trocknenden, halb-trocknenden und nicht-trocknenden Fettsäuren bzw. Ölen. Je nach Gehalt an Ölen unterscheidet man zwischen kurzöligen, mittelöligen und langöligen Alkydharzen.

Die Filmbildung von trocknenden Alkydharzen beruht auf einer Erhöhung der Molekular-Masse durch eine chemische Vernetzung der ungesättigten Fettsäuren. Diese Polymerisation wird durch Autooxidations-Vorgänge eingeleitet (so genannte Autoxypolymerisation). Zur katalytischen Beschleunigung der autoxidativen Trocknung und Filmbildung werden den Alkydharzen i.a. Aktiv- und Hilfs-Trockenstoffe bzw. Siccative zugesetzt, bei denen es sich um Metallsalze organischer Säuren handelt.

Eine weitere Bereicherung erhielten die Alkydharze durch die Modifizierung mit anderen Komponenten wie Styrol, Polyisocyanaten, Phenolharzen, Epoxiden, Siliconen. Bei der Herstellung von Urethan-Alkydharzen bzw. Urethan-Alkyden werden hydroxylgruppenhaltige, langölige Alkydharze mit Polyisocyanaten in geeigneten organischen Solventien umgesetzt, bis keine freien Isocyanat-Gruppen mehr vorhanden sind (NCO/OH ≈ 0,95). Diese lösemittelhaltigen Urethan-Alkyde sind insbesondere für hochwertige Beschichtungen, Grundierungen, Lacke, Versiegelungen geeignet und zeichnen sich durch rasche Trocknung, hohe Härte, ausgezeichnete mechanische Widerstandsfähigkeit, sehr gute Abriebfestigkeit, hohe Wasserfestigkeit, verbesserte Chemikalienbeständigkeit aus.

Aufgrund der Umwelt-Belastung durch Lösemittel-Emissionen und im Hinblick auf die Einhaltung bestehender Emissions-Richtlinien wurden in den letzten Jahren erhebliche Anstrengungen zur Entwicklung von wasserverdünnbaren Bindemitteln für Lacke und Beschichtungen mit einem möglichst geringen Gehalt an flüchtigen organischen Verbindungen (VOC, volatile organic compounds) unternommen.

Fettsäuremodifizierte, oxidativ trocknende Polyurethan-Dispersionen stellen synergistische Kombinationen aus Alkydharzen und Polyurethan-Harzen dar, die das exzellente Eigenschafts-Profil beider Typen von Polymeren in sich vereinigen. Diese selbstvernetzenden wässrigen Polyurethan-Dispersionen können lösungsmittelfrei (zero VOC) oder lösungsmittelarm (low VOC) hergestellt werden und sind demgemäß deutlich umweltfreundlicher als konventionelle lösemittelhaltige Urethan-Alkyde. Je nach Anforderungs-Profil können einkomponentige oder zweikomponentige Systeme eingesetzt werden. Die Performance der aus oxidativ trocknenden Polyurethan-Dispersionen hergestellten Lacke und Beschichtungen ist für viele Anwendungszwecke geeignet.

Die Herstellung von fettsäuremodifizierten und oxidativ trocknenden Polyurethan-Dispersionen und deren Anwendung in Einkomponenten- und Zweikomponenten-Systemen ist bekannt.

In EP-A 379 007 werden Polyurethan-Dispersionen auf Basis von oxidativ trocknenden Alkyd-Harzen beschrieben. Mit Ausnahme der relativ langsamen Trocknung zeichnen sich diese Bindemittel durch ein hohes Eigenschafts-Niveau aus. Gemäß EP-A 451 647 werden Polyurethan-Dispersionen auf Basis von oxidativ trocknenden Alkyd-Harzen offenbart, die bedingt durch den hohen Lösemittel-Gehalt, der hohen Viskosität und der hohen Ladung Nachteile aufweisen. Entsprechend dem Verfahren gemäß EP-A 640 632 und EP-A 647 665 werden trocknende Öle mit Polyolen zu Monoglyceriden umgeestert und zur Herstellung von oxidativ trocknenden Polyurethan-Dispersionen verwendet.

Aus EP-A 729 991 sind hydroxylgruppenhaltige Polyurethan-Dispersionen auf Basis von oxidativ trocknenden Alkydharzen bekannt, die zur Herstellung von einkomponentigen oder zweikomponentigen Beschichtungsmitteln geeignet sind. Diese Bindemittel zeigen jedoch nur bei zweikomponentiger Verarbeitung in Verbindung mit Härtern gute Ergebnisse.

In DE-OS 36 30 422 wird die Umsetzung teilepoxidierter trocknender Öle mit Polyolen und deren Verwendung zur Herstellung von Polyurethan-Dispersionen beschrieben. Diese Polyurethan-Dispersionen besitzen nur geringe Trocknungs-Fähigkeiten. DE-OS 42 37 965 offenbart hydrierte Dimerfettsäuren bzw. Dimerdiole zur Herstellung von Polyurethan-Dispersionen, die in Kombination mit Härtern unter Einbrenn-Bedingungen verarbeitet werden. Gemäß DE-OS 44 45 199 werden Polyurethan-Dispersionen auf Basis von fettsäuremodifizierten und oxidativ trocknenden Polyhydroxypolyesteramiden und Polyurethan-Prepolymeren hergestellt.

Aus EP-A 444 454 sind lufttrocknende Polyurethanharze bekannt, die durch Umsetzung von Isocyanaten mit Polyolen die lufttrocknende Gruppen enthalten sowie mit niedermolekularen Polyolen und Carboxylgruppenhaltigen Polyolen hergestellt wurden. Die Polyurethanharze weisen eine Molekular-Masse von ca. 1 600 bis 30 000 Dalton auf. Diese Systeme benötigen zur Stabilisierung einen vergleichsweise hohen Gehalt an internen Emulgatoren. Außerdem erfolgt die Filmbildung ausschließlich durch chemische Trocknung (oxidative Trocknung).

Für die Herstellung von fettsäuremodifizierten, oxidativ trocknenden Polyurethan-Dispersionen werden kurz- bis mittelölige Alkydharze verwendet, die terminale und gegenüber Polyisocyanaten reaktive Hydroxyl-Gruppen aufweisen. Die Alkydharze werden in reiner Form oder als Lösungen in organischen Solventien eingesetzt. Zudem können die Alkydharze mit ionischen oder nicht-ionischen internen Emulgatoren ausgerüstet sein. Zur Erhöhung der anfänglichen Chemikalien-Resistenz (pre-crosslinking) der aus den Polyurethan-Dispersionen hergestellten Beschichtungen werden häufig lufttrocknende Alkydharze mit einer Hydroxyl-Funktionalität F >2 eingesetzt. Neben den Alkydharzen können noch weitere polymere Polyole im Polyurethan-Gerüst (polyurethane backbone) enthalten sein. Bei der Auftrocknung findet in Gegenwart von Luftsauerstoff und Siccativen eine Vernetzung der fettsäuremodifizierten Polyurethan- oder Polyurethan-Polyharnstoff-Polymere statt (postcrosslinking).

Als mögliche Synthese-Variationen kommen der Prepolymer Mixing Process (low VOC), der Solvent Process (zero VOC) oder Kombinationen dieser Verfahren in Frage. Bei der Synthese der Polyurethan-Prepolymere wird zumeist eine Funktionalität F <2,5 angestrebt, um eine Gelierung zu vermeiden und um die Viskosität niedrig zu halten bzw. die Löslichkeit des Prepolymers in den verwendeten Solventien aufrecht zu erhalten.

Die Synthese dieser oxidativ trocknenden alkydharzmodifizierten Polyurethan-Dispersionen ist jedoch mit verschiedenen Problemen verbunden. Bei Verwendung des Prepolymer Mixing Process werden große Mengen an internen Emulgatoren sowie Solventien benötigt. Verantwortlich dafür sind die hohe Viskosität der Polyurethan-Prepolymere und die Hydrophobie der Alkydharze. Diese Problematik wird zumeist dadurch umgangen, dass die Synthese mit Hilfe des Solvent Process oder Kombinationen aus Prepolymer Mixing Process und Solvent Process durchgeführt wird. Diese Verfahren sind allerdings deutlich aufwendiger und kostenintensiver als der Prepolymer Mixing Process, da das zur Herstellung der Polyurethan-Dispersion benötigte Solvens nach erfolgter Synthese durch Destillation entfernt werden muss. Der im Vergleich mit konventionellen Urethan-Alkydharzen meist geringere Anteil an ungesättigten Fettsäuren verursacht zudem eine langsamere Trocknung.

In DE-A-198 58 554 werden selbstvernetzende Polyurethan-Polymer-Hybrid-Dispersionen auf Basis oxidativ trocknender Polyole mit hoher Filmhärte offenbart. Diese werden aus den Umsetzungskomponenten (A) 0,3 bis 12 Gew.-% einer zur oxidativen Trocknung befähigten ungesättigten Fettsäure-Komponente, bestehend aus mindestens einem ungesättigten Fettsäure-Derivat bzw. Fettsäure-Epoxyester mit zwei oder mehreren gegenüber Polyisocyanaten reaktiven Hydroxylgruppen, (B) 1,5 bis 18 Gew.-% einer Polyol-Komponente, (C) 3,5 bis 16 Gew.-% einer Polyisocyanat-Komponente, (D) 0 bis 2 Gew.-% einer Siccativ-Komponente, (E) 0 bis 8 Gew.-% einer Lösemittel-Komponente, (F) 0,3 bis 2,5 Gew.-% einer Neutralisations-Komponente, (G) 0,1 bis 1,5 Gew.-% einer Kettenverlängerungs-Komponemte, (H) 5 bis 45 Gew.-% einer MonomerKomponente, (I) 0,05 bis 2 Gew.-% einer Initiatior-Komponente und als Rest Wasser erhalten. Ein Nachteil dieser Polyurethan-Polymer-Hybrid-Dispersion besteht darin, dass bei bestimmten Anwendungen eine zu geringe Chemikalienbeständigkeit gegeben ist.

Ziel der vorliegenden Erfindung war es daher, eine selbstvernetzende Polyurethan-Dispersion auf Basis von oxidativ trocknenden Diolen und/oder Triolen zu entwickeln, die sich gegenüber dem bekannten Stand der Technik durch eine einfache Synthese-Methodik bei gleichzeitig verbesserten Eigenschaften, insbesondere einer erhöhten Chemiekalienbeständigkeit, auszeichnet.

Diese Aufgabe wurde erfindungsgemäß dadurch gelöst, dass die Polyurethan-Dispersion die Umsetzungskomponenten
(A) >12 bis 30 Gew.-% einer zur oxidativen Trocknung befähigten ungesättigten Fettsäure-Komponente, bestehend aus mindestens einem ungesättigten Fettsäure-Derivat bzw. Fettsäureepoxyester mit zwei oder drei reaktiven Hydroxyl-Gruppen,
(B) 2 bis 11 Gew.-% einer Polyol-Komponente bestehend aus
   (i) 0 bis 0,15 Gew.-% von mindestens einem niedermolekularen Polyol mit zwei oder mehr reaktiven Hydroxyl-Gruppen und einer Molekular-Masse von 60 bis 150 Dalton,
   (ii) 0,8 bis 6 Gew.-% von mindestens einem höhermolekularen Polyol mit zwei oder mehr reaktiven Hydroxyl-Gruppen und einer Molekular-Masse von 500 bis 4 000 Dalton,
   (iii) 1,2 bis 3,5 Gew.-% von mindestens einem anionisch modifizierten Polyol mit zwei oder mehr reaktiven Hydroxyl-Gruppen und einer oder mehreren gegenüber Polyisocyanaten inerten Carboxyl-Gruppen,
(C) 8 bis 25 Gew.-% einer Polyisocyanat-Komponente, bestehend aus mindestens einem Polyisocyanat oder Polyisocyanat-Derivat mit zwei oder mehr aliphatischen oder aromatischen Isocyanat-Gruppen,
(D) 0 bis 10 Gew.-% einer Solvens-Komponente, bestehend aus mindestens einem gegenüber Polyisocyanaten inerten oder mit Wasser ganz oder teilweise mischbaren Solvens,
(E) 0,5 bis 3 Gew.-% einer Neutralisations-Komponente, bestehend aus einer Base auf Basis eines Amins oder Hydroxids,
(F) 0 bis 0,5 Gew.-% einer Siccativ-Komponente aus mindestens einem wasseremulgierbaren Aktiv- oder Hilfstrockenstoff,
(G) 0,5 bis 3 Gew.-% einer Kettenverlängerungs-Komponente, bestehend aus mindestens einem Polyamin mit zwei oder mehr reaktiven Amino-Gruppen, sowie als Rest Wasser enthält.

Es hat sich nämlich überraschenderweise gezeigt, dass die erfindungsgemäße Polyurethan-Dispersion relativ einfach herstellbar ist und dadurch den hohen Anteil an ungesättigten Fettsäuren auch bei niedriger Dosierung bzw. hohem NCO/OH-Verhältnis ein hohes Trocknungsvermögen gewährleistet. Außerdem kann bei der Herstellung der erfindungsgemäßen Polyurethan-Dispersion auf Grund der niedrigen Viskosität der Polyurethan-Prepolymeren der Gehalt an internen Emulgatoren und Solventien im Vergleich zu konventionellen lösemittelarmen Produkten niedrig gehalten werden.

Die zur oxidativen Trocknung befähigte Komponente (A) mit einem Anteil von >12 bis 30 Gew.-%, vorzugsweise von >12, besonders bevorzugt von ≥13 und am meisten bevorzugt ≥14 bis 20 Gew.-%, besteht aus mindestens einem ungesättigten Fettsäure-Derivat mit zwei oder drei gegenüber Polyisocyanaten reaktiven Hydroxyl-Gruppen, hergestellt aus ungesättigten Fettsäuren und aliphatischen oder aromatischen Epoxid-Harzen bzw. Polyepoxiden mit zwei oder drei gegenüber Fettsäuren reaktiven Epoxid-Gruppen. Diese Fettsäure-Derivate bzw. Fettsäureepoxyester werden beispielsweise durch stöchiometrische Umsetzung von maximal dreifach ungesättigten Fettsäuren und aliphatischen oder aromatischen Epoxid-Harzen bzw. Polyepoxiden bei Temperaturen von mindestens 140°C unter Katalyse mit Tetraalkylammoniumhalogeniden erhalten. Bei dieser Umsetzung bzw. Additions-Reaktion reagieren die Carboxyl-Gruppen der ungesättigten Fettsäuren mit den Epoxid-Gruppen der Epoxid-Harze unter Bildung von fettsäuremodifizierten und niedermolekularen Polyolen. Die Komponente (A) besitzt vorzugsweise eine lod-Zahl von 100 bis 150 g I₂· (100g)⁻¹, eine Hydroxyl-Zahl von 120 bis 150 mg KOH·g⁻¹ und eine Säure-Zahl von 1 bis 5 mg KOHg⁻¹. Die Viskosität beträgt vorzugsweise von 2 500 bis 25 000 mPa·s (20 °C).

Die Bezeichnung "ungesättigte Fettsäuren" bezieht sich auf handelsübliche Gemische aus überwiegend mehrfach ungesättigten Fettsäuren, die durch Verseifung und Raffination aus trocknenden Ölen gewonnen werden können. Trocknende Öle stellen natürlich vorkommende Fette und Öle dar, die einen hohen Anteil an mehrfach ungesättigten Monocarbonsäuren im Triglycerid-Verbund aufweisen. Ein hohes Trocknungsvermögen gewährleisten ungesättigte Fettsäuren mit einem hohen Anteil an Monocarbonsäuren mit 18 Kohlenstoff-Atomen und 2 oder 3 Doppelbindungen pro Molekül, wie Linol-Säure (9,12-Octadecadiensäure) und Linolensäure (9,12,15- Octadecatriensäure). Geeignete ungesättigte Fettsäuren sind beispielsweise Leinöl-Fettsäure, Conophoröl-Fettsäure, Lallemantiaöl-Fettsäure, Stilingiaöl-Fettsäure, Sojaöl-Fettsäure, Saffloröl-Fettsäure, Konjuen-Fettsäuren, Ricinen-Fettsäuren, bevorzugt jedoch Leinöl-Fettsäure mit einer Säure-Zahl von 198 bis 202 mg KOH·g⁻¹ und einer lod-Zahl von 170 bis 190 g I₂·(100g)⁻¹.

Epoxid-Harze bzw. Polyepoxide werden durch Umsetzung von Epichlorhydrin mit Polyalkoholen oder Polyaminen mit aktiven Wasserstoffatomen oder durch Epoxidierung von ungesättigten Verbindungen erhalten. Geeignete Polyepoxide sind beispielsweise die durch Umsetzung mit Epichlorhydrin erhaltenen polyfunktionellen Glycidyl-Derivate von 2,2'-Bis-(4-hydroxyphenyl)-propan (Bisphenol A), 2,2'-Bis-(4-hydroxyphenyl)-methan (Bisphenol F), 1,1,2,2-Tetrakis-(4-hydroxyphenyl)-ethan, Phenol-Formaldehyd-Kondensate vom Novolak-Typ, 1,4-Butandiol, 1,4-Bis-(hydroxymethyl)-cyclohexan (Cyclohexandimethanol), 1,2,3-Propantriol (Glycerol), 2-Ethyl-2-hydroxymethyl-1,3-propandiol (Trimethylolpropan), Aminobenzol, 4-Amino-phenol, 2,4,6-Trihydroxy-1,3,5-triazin (Isocyanursäure). Unter Glycidyl-Derivaten werden dabei Epoxid-Harze bzw. Polyepoxide verstanden. Bevorzugt werden Polyepoxide mit einer Epoxid-Zahl größer als 0.5 eq·(100g)⁻¹ eingesetzt.

Besonders geeignet sind Polyepoxide auf Basis von Bisphenol A und Bisphenol F wie Bisphenol-A-diglycidylether und Bisphenol-F-diglycidylether für oxidativ trocknende Diole sowie Polyepoxide auf Basis von 2,4,6-Trihydroxy-1,3,5-triazin wie Isocyanursäure-tris-(2,3-epoxypropyl)-ester bzw. 1,3,5-Tris-(2,3-epoxypropyl)-1,3,5-trihydrotriazin-2,4,6-trion für oxidativ trocknende Triole. Die Chemie der Epoxid-Harze wird in dem Handbuch "Chemistry And Technology Of Epoxy Resins" von B. Ellis (Editor), Blackie Academic & Professional, Glasgow 1993 im Detail beschrieben.

Bei der Komponente (B) mit einem Anteil von 2 bis 11 Gew.-% handelt es sich um Kombinationen von niedermolekularen, höhermolekularen und dispergierenden Polyolen.

Die Komponente (B) (i) mit einem Anteil von 0 bis 1,5 Gew.-% und vorzugsweise von 0,4 bis 1 Gew.-% besteht aus mindestens einem niedermolekularen Polyol mit einer Molekular-Masse von 60 bis 150 Dalton, insbesondere 90 bis 140 Dalton, sowie zwei oder mehr, z.B. zwei, drei oder vier gegenüber Polyisocyanaten reaktiven Hydroxyl-Gruppen. Als geeignete niedermolekulare Polyole können beispielsweise 1,2-Ethandiol (Ethylenglykol), 1,2-Propandiol (1,2-Propylenglykol), 1,3-Propandiol (1,3-Propylenglykol), 1,4-Butandiol (1,4-Butylenglykol), 1,6-Hexandiol (1,6-Hexamethylenglykol), 2-Methyl-1,3-propandiol (Handelsname MPDiol Glycol^{®} der Fa. Arco Chemical), 2,2-Dimethyl-1,3-propandiol (Neopentylglykol), 1,4-Bis-(hydroxymethyl)-cyclohexan (Cyclohexandimethanol), 1,2,3-Propantriol (Glycerol), 2-Hydroxymethyl-2-methyl-1,3-propanol (Trimethylolethan), 2-Ethyl-2-hydroxymethyl-1,3-propandiol (Trimethylolpropan), 2,2-Bis-(hydroxmethyl)-1,3-propandiol (Pentaerythrit) eingesetzt werden.

Die Komponente (B) (ii) mit einem Anteil von 0,8 bis 6 Gew.-% und vorzugsweise von 1,6 bis 5 Gew.-% besteht aus mindestens einem höhermolekularen Polyol mit zwei oder mehr gegenüber Polyisocyanaten reaktiven OH-Gruppen und einer Molekular-Masse von 500 bis 4 000 Dalton, bevorzugt jedoch mit einer Molekular-Masse von 1 000 bis 2 000 Dalton. Als geeignete höhermolekulare polymere Polyole können beispielsweise handelsübliche Polyalkylenglykole (z.B. Voranol-Typen der Fa. Dow Chemical, PolyTHF-Typen der Fa. BASF), aliphatische oder aromatische Polyester-Polyole (z.B. Bester-Typen der Fa. Poliolchimica), Polycaprolacton-Polyole (z.B. Capa-Typen der Fa. Solvany Interox), Polycarbonat-Polyole (z.B. Desmophen C 200 der Fa. Bayer) eingesetzt werden. Die Bezeichnung Polyalkylenglykole bezieht sich insbesondere auf Polyethylenglykole, Polypropylenglykole, gemischte Polyglykole auf Basis Ethylenoxid und Propylenoxid sowie auf Polytetramethylenglykole bzw. Polytetrahydrofurane. Vorzugsweise werden linare bzw. difunktionelle Polypropylenglykole eingesetzt.

Die Komponente (B) (iii) mit einem Anteil von 1,2 bis 3,5 Gew.-% und vorzugsweise von 1,6 bis 3 Gew.-% und einer bevorzugten Molekular-Masse von 100 bis 200 Dalton besteht aus mindestens einem anionisch modifizierbarem Polyol mit zwei oder mehr gegenüber Polyisocyanaten inerten Carboxyl-Gruppen, die in Gegenwart von Aminen oder anderen geeigneten Basen ganz oder teilweise in Carboxylat-Gruppen überführt werden können. Als dispergierende Polyole können Bishydroxyalkancarbonsäuren wie beispielsweise Dimethylolessigsäure, Dimethylolpropionsäure, Dimethylolbuttersäure, Dimethylolvaleriansäure, Citronensäure, Weinsäure eingesetzt werden, bevorzugt jedoch wird Dimethylolpropionsäure bzw. 2-Hydroxymethyl-2-methyl-3-hydroxy-propansäure (Handelsname DMPA^{®} der Fa. Mallinckrodt) verwendet. Die Reaktivität der Carboxyl-Gruppen gegenüber den Polyisocyanaten kann bei den vorliegenden Reaktionsbedingungen vernachlässigt werden.

Die Komponente (C) mit einem Anteil von 8 bis 25 Gew.-% und vorzugsweise von 12 bis 20 Gew.-% besteht aus mindestens einem Polyisocyanat mit zwei oder mehr aliphatisch oder aromatisch gebundenen Isocyanat-Gruppen. Geeignet sind insbesondere die in der Polyurethan-Chemie hinreichend bekannten Polyisocyanate oder Kombinationen daraus. Geeignete aliphatische Polyisocyanate sind beispielsweise 1,6-Diisocyanatohexan (HDI), 1-Isocyanato-5-isocyanato-methyl-3,3,5-trimethylcyclohexan (IPDI), Bis-(4-isocyanatocyclohexyl)-methan (H₁₂MDI), 1,3-Bis-(1-isocyanato-1-methylethyl)-benzol (m-TMXDI) bzw. technische Isomeren-Gemische der einzelnen aliphatischen Polyisocyanate. Geeignete aromatische Polyisocyanate sind beispielsweise 2,4-Diisocyanatotoluol (TDI), Bis-(4-isocyanatophenyl)-methan (MDI) und gegebenenfalls dessen höhere Homologe (Polymeric MDI) bzw. technische Isomeren-Gemische der einzelnen aromatischen Polyisocyanate. Die aliphatischen Polyisocyanate sind gegenüber den aromatischen Polyisocyanaten zu bevorzugen.

Weiterhin sind auch die sogenannten "Lackpolyisocyanate" auf Basis von Bis-(4-isocyanatoyclo-hexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanate dem Stand der Technik entsprechend auf ein Minimum reduziert wurde. Daneben können auch modifizierte Polyisocyanate eingesetzt werden, die beispielsweise durch hydrophile Modifizierung von "Lackpolyisocyanaten" auf Basis von 1,6-Diisocyanatohexan (HDI) mit Polyetheralkoholen oder durch Umsetzung von Isocyanato-5-isocyanatomethyl-3,3,5-trimethyl-cyclohexan (IPDI) mit Trimethylolpropan zugänglich sind.

Die Solvens-Komponente (D) mit einem Anteil von 0 bis 10 Gew.-% und vorzugsweise von 7 bis 9 Gew.-% besteht aus mindestens einem, gegenüber Polyisocyanaten inerten und mit Wasser ganz oder teilweise mischbaren Solvens, das nach der Herstellung in der Polyurethan-Dispersion verbleibt oder durch Destillation ganz oder teilweise entfernt wird. Geeignete Solventien sind beispielsweise hochsiedende Lösemittel wie N-Methylpyrrolidon, Diethylenglykoldimethylether, Dipropylenglykoldimethylether (Proglyde DMM^{®} der Fa. Dow), niedrigsiedende Lösemittel wie Aceton, Butanon oder beliebige Gemische daraus. Bevorzugt werden hochsiedende Solventien wie N-Methyl-pyrrolidon und Dipropylenglykoldimethylether, die nach der Herstellung in der Dispersion verbleiben und als Koaleszenz-Hilfsmittel fungieren.

Die Neutralisations-Komponente (E) mit einem Anteil von 0,5 bis 3 Gew.-% und vorzugsweise von 1 bis 2 Gew.-% besteht aus mindestens einem Amin oder anderen geeigneten Basen, wie z.B. Hydroxiden, die zur vollständigen oder teilweisen Neutralisation der Carboxyl-Gruppen dienen. Geeignete Basen sind beispielsweise Ammoniak und tertiäre Amine wie Dimethylethanolamin, Dimethylisopropanolamin, N-Methyl-morpholin, Triethanolamin, Triethylamin, Triiopropylamin bzw. Gemische dieser Basen. Bevorzugt werden Basen wie Ammoniak, Triethylamin, Dimethylethanolamin, Dimethylisopropanolamin eingesetzt. Ebenfalls geeignet sind Basen auf Basis von Alkalihydroxiden, wie Lithiumhydroxid, Natriumhydroxid oder Kaliumhydroxid. Mit den bevorzugten Basen wird vor oder während der Dispergierung eine Neutralisation bzw. anionische Modifizierung der Polyurethan-Prepolymere vorgenommen. Die Carboxyl-Gruppen der Polyurethan-Prepolymere werden dabei in Carboxylat-Gruppen überführt. Die Neutralisations-Komponente (E) wird hierbei vorzugsweise in einer solchen Menge verwendet, dass der Neutralisationsgrad bei 80 bis 100 Equivalent-%, vorzugsweise jedoch bei 90 bis 100 Equivalent-%, bezogen auf die enthaltenen freien Carboxyl-Gruppen, liegt.

Die Siccativ-Komponente (F) mit einem Anteil von 0 bis 0,5 Gew.-% und vorzugsweise von 0,1 bis 0,5 Gew.-% besteht aus Gemischen von wasseremulgierbaren Aktiv- und Hilfs-Trockenstoffen. Bei diesen Siccativen bzw. Trockenstoffen handelt es sich in der Regel um organometallische und in aliphatischen oder aromatischen Solventien gelöste Metallseifen oder um konventionelle Metallsalze. Trockenstoffe als Katalysatoren beschleunigen den Zerfall der in Anwesenheit von Sauerstoff intermediär gebildeten Peroxide und damit die oxidative Trocknung bzw. Vernetzung. Aktiv-Trockenstoffe basieren auf Metallen mit mehreren Oxidations-Stufen, die Redox-Reaktionen zugänglich sind, wie z.B. Kobalt, Mangan. Hilfstrockenstoffe haben nur in Kombination mit Aktiv-Trockenstoffen eine trocknungsfördernde Wirkung und basieren auf Metallen mit nur einer Oxidations-Stufe, wie z.B. Barium, Calcium, Zink. Bevorzugt werden wasseremulgierbare Aktiv- und Hilfstrockenstoffe oder wasseremulgierbare Kombinationstrockner eingesetzt, wie z.B. Trockner auf Basis von Kobalt, Mangan, Barium, Zink, Calcium.

Die Polyamin-Komponente (G) mit einem Anteil von 0,5 bis 3 Gew.-% und vorzugsweise von 1 bis 2 Gew.-% besteht aus mindestens einem Polyamin mit zwei oder mehr gegenüber Polyisocyanaten reaktiven Amino-Gruppen. Geeignete Amine sind beispielsweise Adipinsäuredihydrazid, Ethylendiamin, Diethylentriamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin oder beliebige Kombinationen dieser Polyamine. Bevorzugt werden difunktionelle Polyamine, wie z.B. Ethylendiamin, eingesetzt. Mit der Polyamin-Komponente (G) wird eine Kettenverlängerung der Polyurethan-Prepolymere vorgenommen. Die Isocyanat-Gruppen der Polyurethan-Prepolymere werden dabei in Harnstoff-Gruppen überführt. Der über diese Polyamine hergestellte Kettenverlängerungs-Grad liegt vorzugsweise bei 50 bis 100 Equivalent-%, insbesondere jedoch bei 70 bis 100 Equivalent-%, bezogen auf die enthaltenen freien Isocyanat-Gruppen des Prepolymers. Die restlichen Isocyanat-Gruppen der Polyurethan-Prepolymere werden bei der Reaktion mit Wasser ebenfalls in Harnstoff-Gruppen oder gegebenenfalls in Allophanat- oder Biuret-Gruppen überführt.

Die bevorzugte Zusammensetzung der erfindungsgemäßen Polyurethan-Dispersion besteht aus >12 bis 20 Gew.-% der Komponente (A), 0,4 bis 1 Gew.-% der Komponente (B) (i), 1,6 bis 5 Gew.-% der Komponente (B) (ii), 1,6 bis 3 Gew.-% der Komponente (B) (iii), 12 bis 20 Gew.-% der Komponente (C), 7 bis 9 Gew.-% der Komponente (D), 1 bis 2 Gew.-% der Komponente (E), 0,1 bis 0,5 Gew.-% der Komponente (F), 1 bis 2 Gew.-% der Komponente (G) sowie als Rest Wasser.

Der Feststoffgehalt der erfindungsgemäßen Polyurethan-Dispersion kann in weiten Grenzen variieren. Er beträgt insbesondere 30 bis 60 Gew.-%, vorzugsweise 35 bis 55 Gew.-%, wobei das Polyurethan-Harz üblicherweise eine Molekular-Masse von 50 000 bis 100 000 Dalton aufweist.

Die Herstellung der erfindungsgemäßen Polyurethan-Dispersion ist relativ unproblematisch und kann nach den übliche Methoden und mit den gängigen Apparaturen erfolgen.

Die Synthese von Polyurethan-Dispersionen wird in vielen Veröffentlichungen im Detail beschrieben, z.B. J.W. Rosthauser, K. Nachtkamp "Wäßrige Polyurethan-Dispersionen", Firmenschrift, Bayer AG; R. Arnoldus, "Water-based Urethane Dispersions" in "Waterborne Coatings", S. 179 - 198, Elsevier, London 1990.

Mit den Komponenten (A) bis (C) wird in Reaktionsstufe a) gemäß den in der Polyurethan-Chemie üblichen Verfahren ein Polyurethan-Prepolymer mit terminalen Isocyanat-Gruppen und lateralen Carboxyl-Gruppen hergestellt, das gegebenenfalls zur Verringerung der Viskosität eine geeignete Solvens-Komponente (D) enthält.

Gemäß einer bevorzugten Ausführungsform werden die Komponenten (A), (B) und gegebenenfalls (D) homogenisiert, anschließend mit der Komponente (C) umgesetzt. Dazu kann entweder die Komponente (C) innerhalb eines Zeitraums von einigen Minuten bis zu einigen Stunden dem Gemisch aus den Komponenten (A), (B) und gegebenenfalls (D) zugesetzt bzw. zudosiert werden oder alternativ dazu das Gemisch der Komponenten (A), (B) und ggf. (D) innerhalb eines Zeitraums von einigen Minuten bis zu einigen Stunden der Komponente (C) zugesetzt bzw. zudosiert werden. Das NOC/OH-Equivalent-Verhältnis der Komponenten (A), (B) (Polyole) und (C) (Polyisocyanate) liegt im Bereich 1,2 bis 2,0, bevorzugt jedoch im Bereich von 1,4 bis 1,8. Der Reaktionsansatz wird unter Ausnutzung der Exothermie der Polyadditions-Reaktion bis zum Erreichen des berechneten NCO-Gehaltes bei 60 °C bis 120 °C, bevorzugt jedoch bei 80 °C bis 100 °C gerührt.

Die Umsetzung a) der Komponente (A) bis (C) gegebenenfalls in Gegenwart der Komponente (C) kann in Anwesenheit oder Abwesenheit von Katalysatoren erfolgen. Bei Bedarf erfolgt ein Zusatz dieser Katalysatoren in Mengen von 0,01 bis 1 Gew.-% bezogen auf den Reaktionssatz. Gebräuchliche Katalysatoren für Polyadditions-Reaktionen an Polyisocyanate sind bspw. Dibutylzinnoxid, Dibutylzinndilaurat, Triethylamin, Zinn(II)-octoat, 1,4-Diaza-bicyclo[2,2,2]octan (DABCO), 1,4-Diaza-bicyclo [3,2,0]-5-nonen (DBN), 1,5-Diaza-bicyclo[5,4,0]-7-undecen (DBU).

Im Anschluss an die Reaktionsstufe a) lässt man das Prepolymer in Stufe b) mit der Neutralisations-Komponente (E) und gegebenenfalls der Siccativ-Komponente (F) reagieren, wobei die für die Stabilisierung der Polyurethan-Dispersion notwendige anionische Modifizierung erreicht wird. Die Neutralisations-Komponente (E) wird entweder vor der Dispergierung in das Prepolymer eingemischt (direkte Neutralisation) oder in der wässrigen Phase vorgelegt (indirekte Neutralisation). Die Siccativ-Komponente (F) kann ebenfalls vor der Dispergierung in das Prepolymer eingemischt oder in der wässrigen Phase vorgelegt werden.

Im Anschluss an die Reaktionsstufe b) wird das Prepolymer gemäß Stufe c) in Wasser dispergiert und durch Umsetzung mit der Kettenverlängerungs-Komponente (G) die hochmolekulare Polyurethan-Dispersion aufgebaut. Bei der Dispergierung wird das Polyurethan-Prepolymer in die wässrige Phase überführt und bildet dabei eine Polyurethan-Prepolymer-Dispersion aus. Die Begriffe "Dispergierung" bzw. "Dispersion" beinhalten, dass neben dispergierten Komponenten auch gelöste Komponenten enthalten sind.

Für die Überführung des Polyurethan-Prepolymers in die wässrige Phase kann alternativ das Prepolymer in die wässrige Phase oder die wässrige Phase in das Prepolymer eingerührt werden.

Zur Verbesserung der Dispergierbarkeit der Polyurethan-Prepolymere können gegebenenfalls auch externe ionische und nicht-ionische Emulgatoren, wie z.B. ethoxyliertes Nonylphenol, zugesetzt werden.

Bei der Kettenverlängerung wird die Polyurethan-Prepolymer-Dispersion mit der Kettenverlängerungs-Komponente (G) umgesetzt, die reaktive Amino-Gruppen aufweist und mit Isocyanat-Gruppen wesentlich rascher reagiert als Wasser. Die Kettenverlängerung der Polyurethan-Prepolymer-Dispersion führt zum Aufbau der Molekular-Masse und zur Bildung einer hochmolekularen Polyurethan-Polyharnstoff-Dispersion bzw. der erfindungsgemäßen selbstvernetzenden Polyurethan-Dispersion.

Die gegebenenfalls enthaltende Solvens-Komponente verbleibt nach der Herstellung in der Dispersion (Prepolymer Mixing Process) und/oder wird durch Destillation ganz oder teilweise entfernt (Solvent Process oder Kombination Solvent Process/Prepolymer Mixing Process). Eine nachträgliche Entfernung des Solvens durch reguläre oder azetrope Destillation oder aber durch Anlegen eines Inertgasstromes erfolgt nur bei besonders hohen Anforderungen in Bezug auf den Rest-Gehalt an organischen Solventien. Für die Herstellung der erfindungsgemäßen selbstvernetzenden Polyurethan-Dispersion wird der Prepolymer Mixing Process bevorzugt.

Die erfindungsgemäß oxidativ trocknende, selbstvernetzende Polyurethan-Dispersion kann als wesentliches oder alleiniges Bindemittel für hochwertige wässrige Lacke oder Beschichtungen eingesetzt werden. Diesen Lacken und Beschichtungen können außerdem die aus der Lacktechnologie hinreichend bekannten Additive zur Herstellung und Lagerungsstabilisierung, für die Filmbildung, für die Filmbeschaffenheit und für die Lackverarbeitung zugesetzt werden. Diese Additive können bereits während der Synthese der erfindungsgemäßen selbstvernetzenden Polyurethan-Dispersion zugesetzt werden, falls das Herstellungs-Verfahren dadurch nicht beeinträchtigt wird. Die auf Basis der selbstvernetzenden Polyurethan-Dispersion hergestellten einkomponentigen Lacke und Beschichtungen eignen sich für alle Anwendungsgebiete, die ein hohes Anforderungs-Profil beinhalten, wie z.B. die Lackierung und Beschichtung der Oberflächen von mineralischen Baustoffen wie Beton, Gips, Zement; Holz und Holzwerkstoffen wie Spanplatten, Holzfaserplatten, Papier; Metall; Kunststoffe. Bei diesen Lacken und Beschichtungen handelt es sich um pigmentierte oder transparente Decklacke, Füller, Grundierungen, Versiegelungen für vorwiegend bauchemische Anwendungen. Die Applikation der hergestellten Lacke und Beschichtungen erfolgt mit den aus der Lacktechnologie bekannten Methoden wie z.B. Fluten, Gießen, Rakeln, Spritzen, Streichen, Tauchen, Walzen.

Wässrige Lacke und Beschichtungen auf Basis der erfindungsgemäßen selbstvernetzenden Polyurethan-Dispersion trocknen bei Raumtemperatur, bei forcierter Wärmetrocknung oder unter Einbrenn-Bedingungen zu glänzenden, harten und klaren Überzügen. Die Trocknung bei Raumtemperatur erfolgt je nach Substrat innerhalb von 2 bis 3 Stunden.

Darüber hinaus eignet sich die erfindungsgemäße Polyurethan-Dispersion auch hervorragend als einkomponentiger Kleb- oder Dichtstoff auf dem Bausektor.

Die Vorteile der erfindungsgemäßen Polyurethan-Dispersion sind deren technisch einfache Herstellung, wobei über die Polyol-Komponenten die Eigenschaften der Polyurethan-Dispersion und der Polyurethan-Filme maßgeschneidert werden können, sowie das ausgezeichnete Trocknungsvermögen und die sonstigen guten anwendungstechnischen Eigenschaften, wie Härte und Chemikalienbeständigkeit bei der Verwendung als Bindemittel für hochwertige Lacke und Beschichtungen.

### Synthese-Beispiele

### Beispiel 1: Fettsäuremodifiziertes Diol (FAM Diol)

In einem Dreihalskolben, ausgerüstet mit KPG-Rührer, Rückflusskühler, Thermometer und Stickstoff-Deckung, wurden 564,62 g eines Epoxid-Harzes auf Basis Bisphenol-A mit einer Epoxid-Zahl von 0,555 eq·(100g)⁻¹ (Handelsname Araldit GY 240 der Fa. Ciba-Geigy) und 879,79 g einer Leinölfettsäure mit einer Säurezahl von 200 mg KOH·g⁻¹ und einer lod-Zahl von 186 g l₂·(100g)⁻¹ (Handelsname Nouracid LE 80 der Fa. Hanf & Nelles) vorgelegt. Nach Zugabe von 1,00 g des Katalysators Tetrabutylammoniumbromid wurde die Mischung unter Stickstoff-Deckung 16 h bei 145 bis 155 °C gerührt. Der Verlauf der Reaktion wurde acidimetrisch verfolgt.

Es wurde folgendes Synthon erhalten:

| **Aussehen** | **gelbbraunes Harz** |
|---|---|
| Viskosität | 2 500 mPa·s (20 °C) |
| Säure-Zahl | 1,2 mg KOH·g⁻¹ |
| Hydroxyl-Zahl | 122,0 mg KOH·g⁻¹ |
| lod-Zahl | 110 g l₂·(100 g)⁻¹ |
| Molmasse | 920 |

### Beispiel 2: Fettsäuremodifiziertes Triol (FAM-Triol)

In einem Dreihalskolben, ausgerüstet mit KPG-Rührer, Rückflusskühler, Thermometer und Stickstoff-Deckung, wurden 98,70 g Isocyanursärue-tris-(2,3-epoxypropyl)-ester (Fa. Aldrich) mit einer Epoxid-Zahl von 1,009 eq. (100g)⁻¹ und 279,65 g einer Leinölfettsäure mit einer Säurezahl von 200 mg KOH·g⁻¹ und einer lod-Zahl von 186 g I₂·(100_{g})⁻¹ (Handelsname Nouracid LE 80 der Fa. Hanf & Nelles) vorgelegt. Nach Zugabe von 0,50 g des Katalysators Tetrabutylammoniumbromid wurde die Mischung unter Stickstoff-Deckung 12 h bei 150 °C gerührt. Der Verlauf der Reaktion wurde acidimetrisch verfolgt.

Es wurde folgendes Synthon erhalten:

| **Aussehen** | **gelbbraunes Harz** |
|---|---|
| Viskosität | 20 000 mPa•s |
| Säure-Zahl | 4,0 mg KOH·g⁻¹ |
| Hydroxyl-Zahl | 134,6 mg KOH•g⁻¹ |
| lod-Zahl | 134 g l₂·(100 g)⁻¹ |
| Molmasse | 1 250 |

### Beispiel 3: Selbstvernetzende Polyurethan-Dispersion auf Basis FAM-Diol und Polyether im Verhältnis 80:20

In einem Vierhalskolben, ausgerüstet mit KPG-Rührer, Rückflusskühler, Thermometer und Stickstoff-Deckung, wurde ein Gemisch aus 80,00 g FAM-Diol ähnlich Beispiel 1 mit einer Hydroxyl-Zahl von 114,7 mg KOH·g⁻¹, 20,00 g eines Polypropylenglykols mit einer Hydroxyl-Zahl von 112,2 mg KOH·g⁻¹ (Handelsname Voranol P1010 der Fa. Dow), 3,00 g Trimethylolpropan, 10,00 g Dimethylolpropionsäure und 20,00 g N-Methylpyrrolidon vorgelegt. Nach Zugabe von 66,07 g Isophorondiisocyanat (Handelsname Vestanat IPDI der Fa. Hüls) wurde die Mischung unter Stickstoff-Deckung bei 80 bis 90 °C gerührt, bis der berechnete NCO-Gehalt erreicht wurde (NCO/OH = 1,40). Der Verlauf der Reaktion wurde acidimetrisch verfolgt. Nach Abschluss der Polyadditions-Reaktion wurde ein NCO-Gehalt von 3,73 Gew.-% (Theorie: 3,69 Gew.-%) gefunden. Das Prepolymer wurde dann mit 25,00 g N-Methylpyrrolidon verdünnt, unter intensivem Rühren mit 0,05 Gew.-% Octa-Soligen Trockner 123 Aqua, 0,15 Gew.-% Octa-Soligen Kobalt 7 % Aqua und 0,50 Gew.-% Octa-Soligen Calcium 10 % (Handelsnamen der Fa. Borchers) bezogen auf das feste Prepolymer siccativiert und anschließend mit der erforderlichen Menge an Triethylamin neutralisiert.

### Dispergierung und Kettenverlängerung:

190,00 g des Prepolymers wurden anschließend unter intensivem Rühren in 247,10 g demineralisiertem Wasser dispergiert und zum Aufbau der Molekularmasse mit der erforderlichen Menge an Ethylendiamin kettenverlängert.

Es wurde eine stabile Polyurethan-Dispersion mit folgender Charakteristik erhalten:

| **Aussehen** | **opake Flüssigkeit** |
|---|---|
| Feststoff-Gehalt | 36,3 Gew.-% |
| pH | 7,8 |
| Viskosität - Brookfield | 70 mPa•s (20°C) |
| Mittlere Partikel-Größe | 136 nm |
| NMP-Gehalt | 8,7 Gew.-% |
| lod-Gehalt | 22 g l₂·(100g)⁻¹ |

### Beispiel 4: Selbstvernetzende Polyurethan-Dispersion auf Basis FAM-Diol, FAM-Triol und Polyether im Verhältnis 80:10:10

In einem Vierhalskolben ausgerüstet, mit KPG-Rührer, Rückflusskühler, Thermometer und Stickstoff-Deckung, wurde ein Gemisch aus 80,00 g FAM-Diol aus Beispiel 1 mit einer Hydroxyl-Zahl von 122,0 mg KOH·g⁻¹, 10,00 g FAM-Triol aus Beispiel 2 mit einer Hydroxyl-Zahl von 134,6 mg KOH·g⁻¹, 10,00 g eines Polypropylenglykols mit einer Hydroxyl-Zahl von 112,2 mg KOH·g⁻¹ (Handelsname Voranol P1010 der Fa. Dow), 3,00 g Trimethylolpropan, 11,00 g Dimethylolpropionsäure und 20,00 g N-Methylpyrrolidon vorgelegt. Nach Zugabe von 74,86 g Isophorondiisocyanat (Handelsname Vestanat IPDI der Fa. Hüls) wurde die Mischung unter Stickstoff-Deckung bei 80 bis 90°C gerührt, bis der berechnete NCO-Gehalt erreicht wurde (NCO/OH = 1,50). Der Verlauf der Reaktion wurde acidimetrisch verfolgt. Nach Abschluss der Polyadditions-Reaktion wurde ein NCO-Gehalt von 4,23 Gew.-% (Theorie: 4,52 Gew.-%) gefunden. Das Prepolymer wurde dann mit 25,00 g N-Methylpyrrolidon verdünnt, unter intensivem Rühren mit 0,05 Gew.-% Octa-Soligen Trockner 123 Aqua, 0,15 Gew.-% Octa-Soligen Kobalt 7 % Aqua und 0,50 Gew.-% Octa-Soligen Calcium 10 % (Handelsnamen der Fa. Borchers) bezogen auf das feste Prepolymer siccativiert und anschließend mit der erforderlichen Menge an Triethylamin neutralisiert.

### Dispergierung und Kettenverlängerung:

215,00 g des Prepolymers wurden anschließend unter intensivem Rühren in 247,30 g demineralisiertem Wasser dispergiert und zum Aufbau der Molekular-Masse mit der erforderlichen Menge an Ethylendiamin kettenverlängert.

Es wurde eine stabile Polyurethan-Dispersion mit folgender Charakteristika erhalten:

| **Aussehen** | **opake Flüssigkeit** |
|---|---|
| Feststoff-Gehalt | 38,6 Gew.-% |
| pH | 7,5 |
| Viskosität - Brookfield | 38,6 mPa•s (20 °C) |
| Mittlere Partikel-Größe | 152 nm |
| NMP-Gehalt | 8,8 Gew.-% |
| lod-Gehalt | 25 g l₂·(100g)⁻¹ |

### Beispiel 5: Selbstvernetzende Polyurethan-Dispersion auf Basis FAM-Diol, FAM Triol und Polyether im Verhältnis 70:10:20

### Synthese des Prepolymers:

In einem Vierhalskolben, ausgerüstet mit KPG-Rührer, Rückflusskühler, Thermometer und Stickstoff-Deckung, wurde ein Gemisch aus 70,00 g FAM-Diol aus Beispiel 1 mit einer Hydroxyl-Zahl von 122,0 mg KOH·g⁻¹, 10,00 g FAM-Triol aus Beispiel 2 mit einer Hydroxyl-Zahl von 134,6 mg KOH·g⁻¹, 20,00 g eines Polypropylenglykols mit einer Hydroxyl-Zahl von 112,2 mg KOH·g⁻¹ (Handelsname Voranol P1010 der Fa. Dow), 3,00 g Trimethylolpropan, 12,00 g Dimethylolpropionsäure und 20,00 g N-Methylpyrrolidon vorgelegt. Nach Zugabe von 82,19 g Isophorondiisocyanat (Handelsname Vestanat IPDI der Fa. Hüls wurde die Mischung unter Stickstoff-Deckung bei 80 bis 90 °C gerührt, bis der berechnete NCO-Gehalt erreicht wurde (NCO/OH = 1,60). Der Verlauf der Reaktion wurde acidimetrisch verfolgt. Nach Abschluss der Polyadditions-Reaktion wurde ein NCO-Gehalt von 5,38 Gew.-% (Theorie: 5,36 Gew.-%) gefunden. Das Prepolymer wurde dann mit 25,00 g N-Methylpyrrolidon verdünnt, unter intensivem Rühren mit 0,05 Gew.-% Octa-Soligen Trockner 123 Aqua, 0,15 Gew.-% Octa-Soligen Kobalt 7 % Aqua und 0,50 Gew.-% Octa-Soligen Calcium 10 % (Handelsnamen der Fa. Borchers) bezogen auf das feste Prepolymer siccativiert und anschließend mit der erforderlichen Menge an Triethylamin neutralisiert.

### Dispergierung und Kettenverlängerung:

230,00 g des Prepolymers wurden anschließend unter intensivem Rühren in 255,90 g demineralisiertem Wasser dispergiert und zum Aufbau der Molekular-Masse mit der erforderlichen Menge an Ethylendiamin kettenverlängert.

Es wurde eine stabile Polyurethan-Dispersion mit folgender Charakteristik erhalten:

| **Aussehen** | **opake Flüssigkeit** |
|---|---|
| Feststoff-Gehalt | 39,3 Gew.-% |
| pH | 7,5 |
| Viskosität - Brookfield | 330 mPa•s (20°C) |
| Mittlere Partikel-Größe | 287 nm |
| NMP-Gehalt | 8,6 Gew.-% |
| lod-Gehalt | 24 g l₂·(100g)⁻¹ |

### Beispiel 6: Selbstvernetzende Polyurethan-Dispersion auf Basis FAM-Diol, FAM-Triol und Polyether im Verhältnis 65:15:20

In einem Vierhalskolben, ausgerüstet mit KPG-Rührer, Rückflusskühler, Thermometer und Stickstoff-Deckung, wurde ein Gemisch aus 65,00 g FAM-Diol aus Beispiel 1 mit einer Hydroxyl-Zahl von 122,0 mg KOH·g⁻¹, 15,00 g FAM-Triol aus Beispiel 2 mit einer Hydroxyl-Zahl von 134,6 mg KOH·g⁻¹, 20,00 g eines Polypropylenglykols mit einer Hydroxyl-Zahl von 112,2 mg KOH·g⁻¹ (Handelsname Voranol P1010 der Fa. Dow), 3,00 g Trimethylolpropan, 13,00 g Dimethylolpropionsäure und 20,00 g N-Methylpyrrolidon vorgelegt. Nach Zugabe von 85,04 g Isophorondiisocyanat (Handelsname Vestanat IPDI der Fa. Hüls) wurde die Mischung unter Stickstoff-Deckung bei 80 bis 90 °C gerührt, bis der berechnete NCO-Gehalt erreicht wurde (NCO/OH = 1,60). Der Verlauf der Reaktion wurde acidimetrisch verfolgt. Nach Abschluss der Polyadditions-Reaktion wurde ein NCO-Gehalt von 5,30 Gew.-% (Theorie: 5,48 Gew.-%) gefunden. Das Prepolymer wurde dann mit 25,00 g N-Methylpyrrolidon verdünnt, unter intensivem Rühren mit 0,05 Gew.-% Octa-Soligen Trockner 123 Aqua, 0,15 Gew.-% Octa-Soligen Kobalt 7 % Aqua und 0,50 Gew.-% Octa-Soligen Calcium 10 % (Handelsnamen der Fa. Borchers) bezogen auf das feste Prepolymer siccativiert und anschließend mit der erforderlichen Menge an Triethylamin neutralisiert.

### Dispergierung und Kettenverlängerung:

220,00 g des Prepolymers wurden anschließend unter intensivem Rühren in 298,20 g demineralisiertem Wasser dispergiert und zum Aufbau der Molekular-Masse mit der erforderlichen Menge an Ethylendiamin kettenverlängert.

Es wurde eine stabile Polyurethan-Dispersion mit folgender Charakteristik erhalten:

| **Aussehen** | **opake Flüssigkeit** |
|---|---|
| Feststoff-Gehalt | 35,7 Gew.-% |
| pH | 7,4 |
| Viskosität - Brookfield | 3 000 mPa•s (20 °C) |
| Mittlere Partikel-Größe | 258 nm |
| NMP-Gehalt | 7,6 Gew.-% |
| lod-Gehalt | 22 g l₂·(100g)⁻¹ |

### Vergleichsbeispiel:

### Polyurethan-Dispersion auf Basis Bisphenol-A-propoxylat ohne oxidativ trocknenden Komponenten

In einem Vierhalskolben ausgerüstet mit KPG-Rührer, Rückflusskühler, Thermometer und Stickstoff-Deckung, wurde ein Gemisch aus 100,00 g eines Bisphenol-A-propoxylat (3,6 PO/Phenol) mit einer Hydroxyl-Zahl von 174 mg KOH·g⁻¹ (Fa. Aldrich), 9,50 g Dimethylolpropionsäure und 10,00 g N-Methylpyrrolidon vorgelegt. Nach Zugabe von 70,29 g Isophorondiisocyanat (Handelsname Vestanat IPDI der Fa. Hüls) wurde die Mischung unter Stickstoff-Deckung bei 80 bis 90 °C gerührt, bis der berechnete NCO-Gehalt erreicht wurde (NCO/OH =1,40). Der Verlauf der Reaktion wurde acidimetrisch verfolgt. Nach Abschluss der Polyadditons-Reaktion wurde ein NCO-Gehalt von 3,91 Gew.-% (Theorie: 3,83 Gew.-%) gefunden. Das Prepolymer wurde dann unter intensivem Rühren mit der erforderlichen Menge an Triethylamin neutralisiert.

### Dispergierung und Kettenverlängerung:

175,00 g des Prepolymers wurden dann anschließend unter intensivem Rühren in 299,40 g demineralisiertem Wasser dispergiert und zum Aufbau der Molekularmasse mit der erforderlichen Menge an Ethylendiamin kettenverlängert.

Es wurde eine stabile Polyurethan-Dispersion mit folgender Charakteristik erhalten:

**Tabelle I**

| **Aussehen** | **opake Flüssigkeit** |
|---|---|
| Feststoff-Gehalt | 27,4 Gew.-% |
| pH | 7,8 |
| Viskosität - Brookfield | 1 670 mPa·s (20 °C) |
| Mittlere Partikel-Größe | 222 nm |

### Beispiele 7 bis 18

Selbstvernetzende Polyurethan-Dispersionen auf Basis FAM-Diol, FAM-Triol und polymeren Polyolen.

Die Herstellung der Polyurethan-Dispersionen erfolgte in Analogie zu dem in den Beispielen 3 bis 6 beschriebenen Verfahren.

| Beispiel | FAM-Diol [g] | FAM-Triol [g] | TMP [g] | Polymeres Polyol Nr. | DMP A [g] | NCO/O H | IPDI/ H₁₂M DI | NMP [g] | Trockner Nr. |
|---|---|---|---|---|---|---|---|---|---|
| 7 | 80.00 | - | 3.00 | 1 | 10.00 | 1.40 | 100/0 | 45.00 | 1 |
| 8 | 80.00 | - | 3.00 | 1 | 10.00 | 1.40 | 100/0 | 45.00 | 3 |
| 9 | 80.00 | 80.00 | 3.00 | 1 | 10.00 | 1.40 | 100/0 | 45.00 | - |
| 10 | 80.00 | - | 3.00 | 1 | 12.00 | 1.60 | 100/0 | 20.00 | 1 |
| 11 | 80.00 | - | 4.00 | 1 | 12.00 | 1.60 | 100/0 | 45.00 | 1 |
| 12 | 80.00 | - | 4.00 | 1 | 13.00 | 1.60 | 0/100 | 45.00 | 1 |
| 13 | 80.00 | - | 4.00 | 1 | 12.50 | 1.60 | 50/50 | 45.00 | 1 |
| 14 | 80.00 | 10.00 | - | 1 | 10.00 | 1.40 | 100/0 | 45.00 | 3 |
| 15 | 75.00 | 15.00 | - | 1 | 10.00 | 1.40 | 100/0 | 45.00 | 3 |
| 16 | 70.00 | 20.00 | - | 1 | 10.00 | 1.40 | 100/0 | 45.00 | 3 |
| 17 | 80.00 | - | 3.00 | 2 | 10.00 | 1.40 | 100/0 | 45.00 | 2 |
| 18 | 80.00 | - | 3.00 | 3 | 10.00 | 1.40 | 100/0 | 45.00 | 2 |

**Tabelle II**

| Polymeres Polyol | | IPDI/H₁₂MDI | Trockner (Gew.-% bezogen auf festes Prepolymer) | |
|---|---|---|---|---|
| 1 | 20.00 g Dow Vorand P1010 Polypropylenglykol, Mₙ = 1000 Dalton | Verhältnis der Equivalent-Mengen von Isophorondiisocyanat (IPDI) und Bis-(4- | 1 | 0.30 % Borchers Octa Soligen Trockner 123 Aqua |
| 2 | 20.00 g Poliolchimica Bester 195 Polyester-Polyol, Mₙ = 959 Dalton | isocyanatocyclohexyl-)methan (H₁₂MDI) | 2 | 0.05 % Borchers Octa Soligen Trockner 123 Aqua |
| 3 | 20.00 g Bayer Desmophen C200 Polycarbonat-Polyol, Mₙ = 2000 Dalton | | | 0.15 % Borchers Octa Soligen Kobalt 7 % Aqua 0.50 % Borchers Octa Soligen |
| | | | | Calcium 10 % |
| | | | 3 | 0.12 % OMG Mangan Hydro-Cure III |
| | | | | 0.24 % OMG DRI-Rx HF |

### Beispiele 7 bis 18

Selbstvernetzende Polyurethan-Dispersionen auf Basis FAM-Diol, FAM-Triol und polymeren Polyolen

| Beispie | NCO-Gehalt Th./Gef. [Gew.-%] | Feststoff-Gehalt [Gew.-%] | pH | Viskosität (20 °C) [mPas] | Partikel-Größe Mittl. Durchm. [nm] | lod-Zahl [gl₂•(100g)⁻¹ ] | NMP-Gehalt [Gew.-%] |
|---|---|---|---|---|---|---|---|
| 7 | 3.66 / 3.74 | 37.8 | 8.3 | 2500 | 36 | 18 | 9.1 |
| 8 | 3.69 / 3.71 | 37.3 | 7.7 | 90 | 126 | 23 | 9.0 |
| 9 | 3.47 / 3.49 | 37.6 | 7.8 | 70 | 120 | 23 | 9.1 |
| 10 | 5.36 / 5.28 | 37.2 | 8.1 | 450 | 36 | 19 | 3.6 |
| 11 | 5.37 / 5.26 | 38.8 | 7.8 | 100 | 34 | 19 | 8.4 |
| 12 | 5.17 / 5.11 | 37.6 | 7.9 | 50 | 32 | 18 | 7.4 |
| 13 | 5.31 / 5.12 | 36.0 | 7.8 | 25 | 33 | 21 | 7.4 |
| 14 | 3.31 / 3.39 | 37.3 | 7.6 | 100 | 120 | 24 | 8.9 |
| 15 | 3.25 / 3.49 | 32.9 | 8.0 | 260 | 166 | 22 | 7.9 |
| 16 | 3.26 / 3.35 | 36.0 | 7.6 | 110 | 116 | 24 | 8.6 |
| 17 | 3.65 / 3.57 | 38.3 | 7.7 | 40 | 146 | 22 | 9.2 |
| 18 | 3.89 / 3.89 | 37.3 | 7.6 | 50 | 183 | 22 | 9.0 |

Der NCO-Gehalt Theorie/Gefunden bezieht sich auf das Polyurethan-Prepolymer vor der Neutralisation und Siccativierung.

Alle weiteren Daten beziehen sich auf die Polyurethan-Dispersion nach Neutralisation, Siccativierung, Dispergierung und Ketten-Verlängerung.

### Anwendungsbeispiele

Richt-Rezeptur für Parkett-Lacke auf Basis der erfindungsgemäßen selbstvernetzenden Polyurethan-Dispersionen

**Tabelle III**

| **Bestandteile** | **Mengen** |
|---|---|
| Polyurethan-Dispersion | 98.2 g |
| Entschäumer Byk ChemieBYK-024 | 0.8 g |
| Tensid Air Products Surfynol 104E | 0.5 g |
| Netzmittel Du Pont Zonyl FSN | 0.1 g |
| Verdicker Rohm & Haas Acrysol RM 8 | 0.4 g |

Härte nach König von Parkett-Lacken auf Basis der erfindungsgemäßen selbstvernetzenden Polyurethan-Dispersion (Anfangs-Härte)

**Tabelle IV**

| **Basis** | **Härte nach König [s] (Schichtdicke 100 bis 200 µm)** | | | |
|---|---|---|---|---|
| **Beispiel** | **12 h** | **24 h** | **4 d** | **6 d** |
| 3 | 15 | 39 | 96 | 96 |
| 4 | 14 | 38 | 82 | 96 |
| 5 | 15 | 18 | 87 | 98 |
| 6 | 20 | 40 | 105 | 106 |
| **Vergleicht** ¹⁾ | 15 | 25 | 46 | 49 |

| | | | | |
|---|---|---|---|---|
| ¹⁾ Zeneca Resins NeoRez R-2001 handelsübliche, fettsäuremodifizierte und oxidativ trocknende Polyurethan-Dispersion Feststoff-Gehalt: 35 Gew.-%, NMP-Gehalt: 9,8 Gew.-% | | | | |

Härte nach König von Parkett-Lacken auf Basis der erfindungsgemäßen selbstvernetzenden Polyurethan-Dispersionen (Übersicht)

| **Basis** | **Härte nach König [s]** | | |
|---|---|---|---|
| | **(Schichtdicke 100 bis 200 µm)** | | |
| **Beispiel** | **6 d** | **12 d** | **16 d** |
| **3** | 96 | 103 | 109 |
| **4** | 96 | 115 | 117 |
| **5** | 98 | 120 | 120 |
| **6** | 106 | 144 | 144 |
| **7** | 48 | 58 | 58 |
| **8** | 19 | 23 | 23 |
| **9** | 72 | 83 | 83 |
| **10** | 73 | 85 | 85 |
| **11** | 92 | 111 | 111 |
| **12** | 70 | 80 | 80 |
| **13** | 110 | 114 | 114 |
| **14** | 18 | 22 | 23 |
| **15** | 19 | 25 | 25 |
| **16** | 22 | 29 | 32 |
| **17** | 29 | 36 | 36 |
| **18** | 65 | 94 | 94 |
| **Vergleichs-Beispiel** | 25 | 25 | 25 |
| **Vergleich** ¹⁾ | 49 | 77 | 79 |

Die Chemikalien-Resistenz der aus den erfindungsgemäßen Polyurethan-Dispersionen hergestellten Lacke und Beschichtungen ist durchwegs gut bis sehr gut. Getestet wurde die Beständigkeit gegenüber 2-Butan (MEK), 2-Propanol/Methanol/Wasser = 48:48:4 Gew.-%, Wasser, Natronlauge 20 Gew.-%, Essigsäure 20 Gew.-%.

Die Trocknungs-Charakteristik der aus den erfindungsgemäßen selbstvernetzenden Polyurethan-Dispersionen hergestellten Lacke und Beschichtungen kann durch die Wahl der zur oxidativen Trocknung befähigten ungesättigten Fettsäure-Komponente (A), der Polyol-Komponente (B), der Polyisocyanat-Komponente (C) und der Siccativ-Komponente (F) maßgeschneidert und an die jeweiligen Erfordernisse angepasst werden.

## Patentansprüche

1. Selbstvernetzende hochmolekulare Polyurethan-Dispersion auf Basis von oxidativ trocknenden Diolen und/oder Triolen, **dadurch gekennzeichnet, dass** sie die Umsetzungskomponenten
(A) >12 bis 30 Gew.-% einer zur oxidativen Trocknung befähigten ungesättigten Fettsäure-Komponente bestehend aus mindestens einem ungesättigten Fettsäure-Derivat mit zwei oder drei gegenüber Polyisocyanaten reaktiven Hydroxylgruppen, hergestellt aus ungesättigten Fettsäuren und aliphatischen oder aromatischen Epoxid-Harzen, oder Polyepoxiden mit zwei oder drei gegenüber Fettsäuren reaktiven Epoxidgruppen,
(B) 2 bis 11 Gew.-% einer Polyol-Komponente bestehend aus
(i) 0 bis 1,5 Gew.-% von mindestens einem niedermolekularen Polyol mit zwei oder mehr reaktiven Hydroxyl-Gruppen und einer Molekular-Masse von 60 bis 150 Dalton
(ii) 0,8 bis 6 Gew.-% von mindestens einem höhermolekularen Polyol mit zwei oder mehr reaktiven Hydroxyl-Gruppen und einer Molekular-Masse von 500 bis 4 000 Dalton
(iii) 1,2 bis 3,5 Gew.-% von mindestens einem anionisch modifizierten Polyol mit zwei oder mehr reaktiven Hydroxyl-Gruppen und einer oder mehreren gegenüber Polyisocyanaten inerten Carboxyl-Gruppen,
(C) 8 bis 25 Gew.-% einer Polyisocyanat-Komponente bestehend aus mindestens einem Polyisocyanat oder Polyisocyanat-Derivat mit zwei oder mehr aliphatischen oder aromatischen Isocyanat-Gruppen,
(D) 0 bis 10 Gew.-% einer Solvens-Komponente bestehend aus mindestens einem gegenüber Polyisocyanaten inerten und mit Wasser ganz oder teilweise mischbaren Solvens,
(E) 0,5 bis 3 Gew.-% einer Neutralisations-Komponente bestehend aus mindestens einer Base auf Basis eines Amins oder Hydroxids,
(F) 0 bis 0,5 Gew.-% einer Siccativ-Komponente bestehend aus mindestens einem wasseremulgierbaren Aktiv- oder Hilfstrocken-stoff,
(G) 0,5 bis 3 Gew.-% einer Kettenverlängerungs-Komponente bestehend aus mindestens einem Polyamin mit zwei oder mehr reaktiven Amino-Gruppen sowie als Rest Wasser enthält.

2. Polyurethan-Dispersion nach Anspruch 1,
**dadurch gekennzeichnet,**
**dass** die Komponente (A) eine lod-Zahl im Bereich von 100 bis 150 g I₂·(100 g)⁻¹, eine Hydroxyl-Zahl von 120 bis 150 mg KOH·g⁻¹ sowie eine Säure-Zahl von 1 bis 5 mg KOH·g⁻¹ besitzt.

3. Polyurethan-Dispersion nach einem der Ansprüche 1 und 2,
**dadurch gekennzeichnet,**
**dass** die Komponente (A) eine Viskosität von 2 500 bis 25 000 mPa·s (20 °C) aufweist.

4. Polyurethan-Dispersion nach einem der Ansprüche 1 bis 3,
**dadurch gekennzeichnet,**
**dass** die Komponente (A) ein Umsetzungsprodukt aus ungesättigten Fettsäuren und aliphatischen oder aromatischen Epoxidharzen bzw. Polyepoxiden mit zwei oder drei gegenüber Fettsäure reaktiven Epoxid-Gruppen enthält.

5. Polyurethan-Dispersion nach einem der Ansprüche 1 bis 4,
**dadurch gekennzeichnet,**
**dass** die Komponente (A) ein Umsetzungsprodukt aus maximal dreifach ungesättigten Fettsäuren mit einer lod-Zahl von 170 bis 190 g l₂·(100 g)⁻¹ sowie aliphatischen oder aromatischen Epoxidharzen bzw. Polyepoxiden mit einer Epoxidzahl > 0,5 eq·(100 g)⁻¹ enthält.

6. Polyurethan-Dispersion nach einem der Ansprüche 1 bis 5,
**dadurch gekennzeichnet,**
**dass** die Komponente (B) (i) mindestens ein niedermolekulares Polyol mit einer Molekular-Masse von 90 bis 140 Dalton enthält.

7. Polyurethan-Dispersion nach einem der Ansprüche 1 bis 6,
**dadurch gekennzeichnet,**
**dass** die Komponente (B) (ii) ein polymeres Polyol ausgewählt aus der Gruppe Polyalkylenglykole, aliphatische oder aromatische Polyester-Polyole, Polycaprolacton-Polyole sowie Polycarbonat-Polyole und Kombinationen davon enthält.

8. Polyurethan-Dispersion nach Anspruch 7,
**dadurch gekennzeichnet,**
**dass** die Komponente (B) (ii) lineare bzw. difunktionelle Polypropylenglykole enthält.

9. Polyurethan-Dispersion nach einem der Ansprüche 1 bis 8,
**dadurch gekennzeichnet,**
**dass** die Komponente (B) (ii) mindestens ein höhermolekulares Polyol mit einer Molekular-Masse von 1 000 bis 2 000 Dalton enthält.

10. Polyurethan-Dispersion nach einem der Ansprüche 1 bis 9,
**dadurch gekennzeichnet,**
**dass** die Komponente (B) (iii) mindestens eine Bishydroxyalkancarbonsäure enthält.

11. Polyurethan-Dispersion nach Anspruch 10,
**dadurch gekennzeichnet,**
**dass** die Bishydroxyalkancarbonsäure Dimethylolpropionsäure ist.

12. Polyurethan-Dispersion nach einer der Ansprüche 1 bis 11,
**dadurch gekennzeichnet,**
**dass** die Komponente (B) (iii) mindestens ein anionisch modifiziertes Polyol mit einer Molekular-Masse von 100 bis 200 Dalton enthält.

13. Polyurethan-Dispersion nach einem der Ansprüche 1 bis 12,
**dadurch gekennzeichnet,**
**dass** die Neutralisations-Komponente (E) Ammoniak und/oder tertiäre Amine enthält.

14. Polyurethan-Dispersion nach einem der Ansprüche 1 bis 12,
**dadurch gekennzeichnet,**
**dass** die Neutralisations-Komponente (E) ein Alkalihydroxid enthält.

15. Polyurethan-Dispersion nach einem der Ansprüche 1 bis 14,
**dadurch gekennzeichnet,**
**dass** die Neutralisations-Komponente (E) in einer solchen Menge vorhanden ist, dass er Neutralisationsgrad bzgl. der freien Carboxyl-Gruppen bei 80 bis 100 Equivalent-%, vorzugsweise bei 90 bis 100 Equivalent-%, liegt.

16. Polyurethan-Dispersion nach einem der Ansprüche 1 bis 15,
**dadurch gekennzeichnet,**
**dass** die Siccativ-Komponente (E) Metallseifen und/oder Metallsalze enthält.

17. Polyurethan-Dispersion nach einem der Ansprüche 1 bis 16,
**dadurch gekennzeichnet,**
**dass** die Kettenverlängerungs-Komponente (G) in einer solchen Menge vorliegt, dass der Kettenverlängerungs-Grad 50 bis 100 Equivalent-%, vorzugsweise 70 bis 100 Equivalent-%, bezogen auf die freien Isocyanat-Gruppen des Prepolymers beträgt.

18. Polyurethan-Dispersion nach einem der Ansprüche 1 bis 17,
**dadurch gekennzeichnet,**
**dass** sie die Komponente (A) in einer Menge von >12 bis 20 Gew.-%, die Komponente (B) (i) 0,4 bis 1 Gew.-%, die Komponente (B) (ii) 1,6 bis 5 Gew.-%, die Komponente (B) (iii) 1,6 bis 3 Gew.-%, die Komponente (C) 12 bis 20 Gew.-%, die Komponente (D) 7 bis 9 Gew.-%, die Komponente (E) 1 bis 2 Gew.-% , die Komponente (F) 0,1 bis 0,5 Gew.-%, die Komponente (G) 1 bis 2 Gew.-% sowie als Rest Wasser enthält.

19. Polyurethan-Dispersion nach einem der Ansprüche 1 bis 18,
**dadurch gekennzeichnet,**
**dass** das NCO/OH-Equivalent-Verhältnis der Komponenten (A), (B) und (C) im Bereich 1,2 bis 2,0, vorzugsweise im Bereich von 1,4 bis 1,8 liegt.

20. Polyurethan-Dispersion nach einem der Ansprüche 1 bis 19,
**dadurch gekennzeichnet,**
**dass** der Feststoffgehalt 30 bis 60 Gew.-%, vorzugsweise 35 bis 55 Gew.-%, beträgt.

21. Polyurethan-Dispersion nach einem der Ansprüche 1 bis 20,
**dadurch gekennzeichnet,**
**dass** das Polyurethan-Harz eine Molekular-Masse von 50 000 bis 100 000 Dalton aufweist.

22. Verfahren zur Herstellung der Polyurethan-Dispersion nach einem der Ansprüche 1 bis 21,
**dadurch gekennzeichnet,**
**dass** man
a) die Komponenten (A) bis (C) ggf. in der Solvens-Komponente (D) und gegebenenfalls in Gegenwart eines Katalysators zu einem Polyurethan-Prepolymer umsetzt,
b) anschließend das Prepolymer aus Stufe a) mit der Neutralisations-Komponente (E) und gegebenenfalls der Siccativ-Komponente (F) reagieren lässt und schließlich
c) das Prepolymer aus Stufe b) in Wasser dispergiert und durch Umsetzung mit der Kettenverlängerungs-Komponente (G) die hochmolekulare Polyurethan-Dispersion aufbaut.

23. Verfahren nach Anspruch 22,
**dadurch gekennzeichnet,**
**dass** die Reaktionsstufe a) bei 60 °C bis 120 °C, vorzugsweise bei 80 °C bis 100 °C durchgeführt wird.

24. Verfahren nach einem der Ansprüche 22 und 23,
**dadurch gekennzeichnet,**
**dass** man die Reaktionsstufe a) in Gegenwart von 0,01 bis 1 Gew.-% bezogen auf die Komponenten (A) bis (D) eines für Polyadditionsreaktionen an Polyisocyanaten üblichen Katalysators durchführt.

25. Verwendung der Polyurethan-Dispersion nach einem der Ansprüche 1 bis 21 als Bindemittel für einkomponentige Lacke oder Beschichtungen der Oberflächen von mineralischen Baustoffen, wie z.B. Beton, Holz und Holzwerkstoffen, Papier, Metall und Kunststoffen sowie für einkomponentige Kleb- oder Dichtstoffe im Bausektor.

## Claims

1. Self-crosslinking high molecular weight polyurethane dispersion based on oxidatively drying diols and/or triols, **characterized in that** the reaction components comprise
(A) from >12 to 30% by weight of an unsaturated fatty acid component which is capable of oxidative drying and comprises at least one unsaturated fatty acid derivative which has two or three hydroxyl groups which are reactive toward polyisocyanates and is prepared from unsaturated fatty acids and aliphatic or aromatic epoxy resins, or polyepoxides having two or three epoxide groups which are reactive toward fatty acids,
(B) from 2 to 11% by weight of a polyol component comprising
(i) from 0 to 1.5% by weight of at least one low molecular weight polyol having two or more reactive hydroxyl groups and a molar mass of from 60 to 150 dalton,
(ii) from 0.8 to 6% by weight of at least one relatively high molecular weight polyol having two or more reactive hydroxyl groups and a molar mass of from 500 to 4000 dalton,
(iii) from 1.2 to 3.5% by weight of at least one anionically modified polyol having two or more reactive hydroxyl groups and one or more carboxyl groups which are inert toward polyisocyanates,
(C) from 8 to 25% by weight of a polyisocyanate component comprising at least one polyisocyanate or polyisocyanate derivative having two or more aliphatic or aromatic isocyanate groups,
(D) from 0 to 10% by weight of a solvent component comprising at least one solvent which is inert toward polyisocyanates and is completely or partially miscible with water,
(E) from 0.5 to 3% by weight of a neutralization component comprising a base based on an amine or hydroxide,
(F) from 0 to 0.5% by weight of a siccative component comprising at least one water-emulsifiable active or auxiliary dryer,
(G) from 0.5 to 3% by weight of a chain extension component comprising at least one polyamine having two or more reactive amino groups,
and also water as balance.

2. Polyurethane dispersion according to Claim 1, **characterized in that** the component (A) has an iodine number in the range from 100 to 150 g I₂·(100g)⁻¹, a hydroxyl number of from 120 to 150 mg KOH·g⁻¹ and an acid number of from 1 to 5 mg KOH·g⁻¹.

3. Polyurethane dispersion according to either of Claims 1 and 2, **characterized in that** the component (A) has a viscosity of from 2500 to 25 000 mPa·s (20°C).

4. Polyurethane dispersion according to any of Claims 1 to 3, **characterized in that** the component (A) comprises a reaction product of unsaturated fatty acids and aliphatic or aromatic epoxy resins or polyepoxides having two or three epoxide groups which are reactive toward fatty acid.

5. Polyurethane dispersion according to any of Claims 1 to 4, **characterized in that** the component (A) comprises a reaction product of at most triply unsaturated fatty acids having an iodine number of from 170 to 190 g I₂·(100g)⁻¹ and aliphatic or aromatic epoxy resins or polyepoxides having an epoxide number of >0.5 eq·(100g)⁻¹.

6. Polyurethane dispersion according to any of Claims 1 to 5, **characterized in that** the component (B) (i) comprises at least one low molecular weight polyol having a molecular mass of from 90 to 140 dalton.

7. Polyurethane dispersion according to any of Claims 1 to 6, **characterized in that** the component (B) (ii) comprises a polymeric polyol selected from the group consisting of polyalkylene glycols, aliphatic or aromatic polyester polyols, polycaprolactone polyols and polycarbonate polyols and combinations thereof.

8. Polyurethane dispersion according to Claim 7, **characterized in that** the component (B) (ii) comprises linear or bifunctional polypropylene glycols.

9. Polyurethane dispersion according to any of Claims 1 to 8, **characterized in that** the component (B) (ii) comprises at least one relatively high molecular weight polyol having a molecular mass of from 1000 to 2000 dalton.

10. Polyurethane dispersion according to any of Claims 1 to 9, **characterized in that** the component B (iii) comprises at least one bishydroxyalkanecarboxylic acid.

11. Polyurethane dispersion according to Claim 10, **characterized in that** the bishydroxyalkanecarboxylic acid is dimethylolpropionic acid.

12. Polyurethane dispersion according to any of Claims 1 to 11, **characterized in that** the component (B) (iii) comprises at least one anionically modified polyol having a molecular mass of from 100 to 200 dalton.

13. Polyurethane dispersion according to any of Claims 1 to 12, **characterized in that** the neutralization component (E) comprises ammonia and/or tertiary amines.

14. Polyurethane dispersion according to any of Claims 1 to 12, **characterized in that** the neutralization component (E) comprises an alkali metal hydroxide.

15. Polyurethane dispersion according to any of Claims 1 to 14, **characterized in that** the neutralization component (E) is present in such an amount that the degree of neutralization based on the free carboxyl groups is from 80 to 100 equivalent-%, preferably from 90 to 100 equivalent-%.

16. Polyurethane dispersion according to any of Claims 1 to 15, **characterized in that** the siccative component (E) comprises metal soaps and/or metal salts.

17. Polyurethane dispersion according to any of Claims 1 to 16, **characterized in that** the chain extension component (G) is present in such an amount that the degree of chain extension is from 50 to 100 equivalent-%, preferably from 70 to 100 equivalent-%, based on the free isocyanate groups of the prepolymer.

18. Polyurethane dispersion according to any of Claims 1 to 17, **characterized in that** the component (A) is present in an amount of from >12 to 20% by weight, the component (B) (i) is present in an amount of from 0.4 to 1% by weight, the component (B) (ii) is present in an amount of from 1.6 to 5% by weight, the component (B) (iii) is present in an amount of from 1.6 to 3% by weight, the component (C) is present in an amount of from 12 to 20% by weight, the component (D) is present in an amount of from 7 to 9% by weight, the component (E) is present in an amount of from 1 to 2% by weight, the component (F) is present in an amount of from 0.1 to 0.5% by weight, the component (G) is present in an amount of from 1 to 2% by weight and the balance is water.

19. Polyurethane dispersion according to any of Claims 1 to 18, **characterized in that** the NCO/OH equivalent ratio of the components (A), (B) and (C) is in the range from 1.2 to 2.0, preferably in the range from 1.4 to 1.8.

20. Polyurethane dispersion according to any of Claims 1 to 19, **characterized in that** the solids content is from 30 to 60% by weight, preferably from 35 to 55% by weight.

21. Polyurethane dispersion according to any of Claims 1 to 20, **characterized in that** the polyurethane resin has a molecular mass of from 50 000 to 100 000 dalton.

22. Process for preparing the polyurethane dispersion according to any of Claims 1 to 21, **characterized in that**
a) the components (A) to (C) are reacted, if appropriate in the solvent component (D) and if appropriate in the presence of a catalyst, to form a polyurethane prepolymer,
b) the prepolymer from stage a) is subsequently allowed to react with the neutralization component (E) and, if appropriate, the siccative component (F) and
c) the prepolymer from stage b) is finally dispersed in water and the high molecular weight polyurethane dispersion is built up by reaction with the chain extension component (G).

23. Process according to Claim 22, **characterized in that** the reaction stage a) is carried out at from 60°C to 120°C, preferably from 80°C to 100°C.

24. Process according to either of Claims 22 and 23, **characterized in that** the reaction stage (a) is carried out in the presence of from 0.01 to 1% by weight, based on the components (A) to (D), of a catalyst customary for polyaddition reactions on polyisocyanates.

25. Use of the polyurethane dispersion according to any of Claims 1 to 21 as binder for one-component paints or varnishes or coatings for the surfaces of mineral building materials such as concrete, wood and wood materials, paper, metal and plastics and for one-component adhesives or sealants in the building sector.

## Revendications

1. Dispersion de polyuréthane autoréticulante de masse moléculaire élevée à base de diols et/ou triols séchant par oxydation, **caractérisée en ce qu'**elle contient les composants réactionnels suivants :
(A) > 12 à 30 % en poids d'un composant acide gras insaturé apte au séchage oxydatif constitué d'au moins un dérivé d'acide gras insaturé contenant deux ou trois groupes hydroxyle réactifs avec les polyisocyanates, fabriqué à partir d'acides gras insaturés et de résines époxydes ou polyépoxydes aliphatiques ou aromatiques contenant deux ou trois groupes époxyde réactifs avec les acides gras,
(B) 2 à 11 % en poids d'un composant polyol constitué par
(i) 0 à 1,5 % en poids d'au moins un polyol de faible masse moléculaire contenant deux groupes hydroxyle réactifs ou plus et ayant une masse moléculaire de 60 à 150 daltons,
(ii) 0,8 à 6 % en poids d'au moins un polyol de masse moléculaire élevée contenant deux groupes hydroxyle réactifs ou plus et ayant une masse moléculaire de 500 à 4 000 daltons,
(iii) 1,2 à 3,5 % en poids d'au moins un polyol modifié anioniquement contenant deux groupes hydroxyle réactifs ou plus et un ou plusieurs groupes carboxyle inertes vis-à-vis des polyisocyanates,
(C) 8 à 25 % en poids d'un composant polyisocyanate constitué d'au moins un polyisocyanate ou dérivé de polyisocyanate contenant deux groupes isocyanate aliphatiques ou aromatiques ou plus,
(D) 0 à 10 % en poids d' un composant solvant constitué d'au moins un solvant inerte vis-à-vis des polyisocyanates et totalement ou partiellement miscible avec l'eau,
(E) 0,5 à 3 % en poids d'un composant de neutralisation constitué d'au moins une base à base d'une amine ou d'un hydroxyde,
(F) 0 à 0,5 % en poids d'un composant siccatif constitué d'au moins un agent actif ou adjuvant siccatif émulsifiable avec l'eau,
(G) 0,5 à 3 % en poids d'un composant allongeur de chaînes constitué d'au moins une polyamine contenant deux groupes amino réactifs ou plus,
le reste étant de l'eau.

2. Dispersion de polyuréthane selon la revendication 1, **caractérisée en ce que** le composant (A) possède un indice d'iode dans la plage allant de 100 à 150 g I₂·(100 g)⁻¹, un indice hydroxyle de 120 à 150 mg KOH·g⁻¹ et un indice d'acidité de 1 à 5 mg KOH·g⁻¹.

3. Dispersion de polyuréthane selon l'une quelconque des revendications 1 et 2, **caractérisée en ce que** le composant (A) présente une viscosité de 2 500 à 25 000 mPa·s (20 °C).

4. Dispersion de polyuréthane selon l'une quelconque des revendications 1 à 3, **caractérisée en ce que** le composant (A) contient un produit de réaction d'acides gras insaturés et de résines époxydes ou polyépoxydes aliphatiques ou aromatiques contenant deux ou trois groupes époxyde réactifs avec les acides gras.

5. Dispersion de polyuréthane selon l'une quelconque des revendications 1 à 4, **caractérisée en ce que** le composant (A) contient un produit de réaction d'acides gras au plus trois fois insaturés, ayant un indice d'iode de 170 à 190 g I₂·(100 g)⁻¹, et de résines époxydes ou polyépoxydes aliphatiques ou aromatiques ayant un indice époxyde > 0,5 éq·(100 g)⁻¹.

6. Dispersion de polyuréthane selon l'une quelconque des revendications 1 à 5, **caractérisée en ce que** le composant (B). (i) contient au moins un polyol de faible masse moléculaire ayant une masse moléculaire de 90 à 140 daltons.

7. Dispersion de polyuréthane selon l'une quelconque des revendications 1 à 6, **caractérisée en ce que** le composant (B) (ii) contient un polyol polymère choisi dans le groupe constitué par les polyalkylène glycols, les polyester-polyols aliphatiques ou aromatiques, les polycaprolactone-polyols et les polycarbonate-polyols, ainsi que leurs combinaisons.

8. Dispersion de polyuréthane selon la revendication 7, **caractérisée en ce que** le composant (B) (ii) contient des polypropylène glycols linéaires ou bifonctionnels.

9. Dispersion de polyuréthane selon l'une quelconque des revendications 1 à 8, **caractérisée en ce que** le composant (B) (ii) contient au moins un polyol de masse moléculaire élevée ayant une masse moléculaire de 1 000 à 2 000 daltons.

10. Dispersion de polyuréthane selon l'une quelconque des revendications 1 à 9, **caractérisée en ce que** le composant (B) (iii) contient au moins un acide bishydroxyalcanecarboxylique.

11. Dispersion de polyuréthane selon la revendication 10, **caractérisée en ce que** l'acide bishydroxyalcanecarboxylique est l'acide diméthylolpropionique.

12. Dispersion de polyuréthane selon l'une quelconque des revendications 1 à 11, **caractérisée en ce que** le composant (B)(iii) contient au moins un polyol modifié anioniquement ayant une masse moléculaire de 100 à 200 daltons.

13. Dispersion de polyuréthane selon l'une quelconque des revendications 1 à 12, **caractérisée en ce que** le composant de neutralisation (E) contient de l'ammoniac et/ou des amines tertiaires.

14. Dispersion de polyuréthane selon l'une quelconque des revendications 1 à 12, **caractérisée en ce que** le composant de neutralisation (E) contient un hydroxyde alcalin.

15. Dispersion de polyuréthane selon l'une quelconque des revendications 1 à 14, **caractérisée en ce que** le composant de neutralisation (E) est présent en une quantité telle que le degré de neutralisation au regard des groupes carboxyle libres soit de 80 à 100 % équivalent, de préférence de 90 à 100 % équivalent.

16. Dispersion de polyuréthane selon l'une quelconque des revendications 1 à 15, **caractérisée en ce que** le composant siccatif (E) contient des savons métalliques et/ou des sels métalliques.

17. Dispersion de polyuréthane selon l'une quelconque des revendications 1 à 16, **caractérisée en ce que** le composant allongeur de chaînes (G) est présent en une quantité telle que le degré d'allongement de chaînes soit de 50 à 100 % équivalent, de préférence de 70 à 100 % équivalent, par rapport aux groupes isocyanate libres du prépolymère.

18. Dispersion de polyuréthane selon l'une quelconque des revendications 1 à 17, **caractérisée en ce qu'**elle contient le composant (A) en une quantité de > 12 à 20 % en poids, le composant (B)(i) en une quantité de 0,4 à 1 % en poids, le composant (B)(ii) en une quantité de 1,6 à 5 % en poids, le composant (B)(iii) en une quantité de 1,6 à 3 % en poids, le composant (C) en une quantité de 12 à 20 % en poids, le composant (D) en une quantité de 7 à 9 % en poids, le composant (E) en une quantité de 1 à 2 % en poids, le composant (F) en une quantité de 0,1 à 0,5 % en poids, le composant (G) en une quantité de 1 à 2 % en poids, le reste étant de l'eau.

19. Dispersion de polyuréthane selon l'une quelconque des revendications 1 à 18, **caractérisée en ce que** le rapport équivalent NCO/OH des composants (A), (B) et (C) se situe dans la plage allant de 1,2 à 2,0, de préférence dans la plage allant de 1,4 à 1,8.

20. Dispersion de polyuréthane selon l'une quelconque des revendications 1 à 19, **caractérisée en ce que** la teneur en solides est de 30 à 60 % en poids, de préférence de 35 à 55 % en poids.

21. Dispersion de polyuréthane selon l'une quelconque des revendications 1 à 20, **caractérisée en ce que** la résine de polyuréthane présente une masse moléculaire de 50 000 à 100 000 daltons.

22. Procédé de fabrication de la dispersion de polyuréthane selon l'une quelconque des revendications 1 à 21, **caractérisé en ce que**
a) les composants (A) à (C) sont transformés en un prépolymère de polyuréthane, éventuellement dans le composant solvant (D) et éventuellement en présence d' un catalyseur, puis
b) le prépolymère de l'étape a) est mis en réaction avec le composant de neutralisation (E) et éventuellement le composant siccatif (F), et enfin
c) le prépolymère de l'étape b) est dispersé dans de l'eau et la dispersion de polyuréthane de masse moléculaire élevée est formée par mise en réaction avec le composant allongeur de chaînes (G).

23. Procédé selon la revendication 22, **caractérisé en ce que** l'étape de réaction a) est réalisée à une température de 60 °C à 120 °C, de préférence de 80 °C à 100 °C.

24. Procédé selon l'une quelconque des revendications 22 et 23, **caractérisé en ce que** l'étape de réaction a) est réalisée en présence de 0,01 à 1 % en poids, par rapport aux composants (A) à (D), d'un catalyseur usuel pour les réactions de polyaddition sur des polyisocyanates.

25. Utilisation de la dispersion de polyuréthane selon l'une quelconque des revendications 1 à 21 en tant que liant pour laques ou revêtements monocomposants pour les surfaces de matériaux de construction minéraux, tels que p. ex. le béton, le bois et les matériaux à base de bois, le papier, le métal et les plastiques, ainsi que pour les agents adhésifs ou d'étanchéité monocomposants dans le secteur du bâtiment.
